# EUROPÄISCHE PATENTSCHRIFT

(11) **EP 3 368 441 B1**
(45) Veröffentlichungstag und Bekanntmachung des Hinweises auf die Patenterteilung: **29.01.2020**
(21) Anmeldenummer: 16787406.4
(22) Anmeldetag: 24.10.2016
(51) Int. Cl.: B65D 81/32

(54) **MEHRKAMMER-FOLIENBEUTEL UND DESSEN VERWENDUNG**
MULTI-CHAMBER FILM BAG AND ITS USE
SAC EN FILM COMPRENANT PLUSIEURS COMPARTIMENTS ET SON UTILISATION

(30) Priorität: 30.10.2015 EP 15192406
(43) Veröffentlichungstag der Anmeldung: 05.09.2018
(73) Patentinhaber: Hilti Aktiengesellschaft, 9494 Schaan (LI)
(72) Erfinder: JEROMENOK, Jekaterina, 86153 Augsburg (DE); KLUJ, Esther Rahel, 86899 Landsberg (DE); PAETOW, Mario, 86859 Igling (DE)
(74) Vertreter: Hilti Aktiengesellschaft Corporate Intellectual Property
(86) Internationale Anmeldenummer: PCT/EP2016/075493
(87) Internationale Veröffentlichungsnummer: WO 2017/072060

(56) Entgegenhaltungen:
- EP-A1- 2 045 227
- WO-A1-87/03809
- DE-A1- 19 545 120
- DE-U1- 29 620 553
- US-A- 4 731 053

## Beschreibung

Die Erfindung betrifft einen Mehrkammer-Folienbeutel für ein anorganisches Mehrkomponenten-Schaumsystem und die Verwendung des Mehrkammer-Folienbeutels zur Verpackung und/oder Verarbeitung eines anorganischen Mehrkomponenten-Schaumsystems. Ferner betrifft die Erfindung die Verwendung des Mehrkammerfolienbeutels in einem Verfahren zur Herstellung eines Ortsschaums, insbesondere eines anorganischen Brandschutzschaums.

Zum schnellen Schließen von Öffnungen, wie beispielsweise Brandschutzdurchführungen im Baubereich, wird ein reaktives Material aus zwei Komponenten vor Ort gemischt und in die Öffnung eingebracht. Das reaktive Material soll bis zur Aushärtung standfest sein, damit es nicht wieder aus der Öffnung herausfließt.

Bei Zweikomponenten-Flüssigharzen wie Polyurethan oder Epoxidharzen wird die Standfestigkeit durch eine entsprechende Einstellung der Viskosität des Materials erreicht. Die reaktiven Komponenten werden getrennt in Zweikomponenten-Kartuschen vorgelegt und mit einem Statikmischer gemischt. Für Mischungen aus Pulverkomponenten und Flüssigkeiten sind Statikmischer jedoch nicht geeignet, weil in der Pulverkomponente eine Brückenbildung auftritt, die eine Vermischung im Statikmischer durch Druck verhindert.

Aus Pulver und Flüssigkeiten bestehende Massen werden daher in einem offenen Gefäß mit Hilfe von Rührstäben oder anderen Mischhilfsmitteln mechanisch miteinander vermengt. Die gemischte Masse kann dann manuell in die zu füllende Öffnung eingebracht und/oder in die gewünschte Form gebracht werden, oder in weitere Applikationshilfsmittel wie beispielsweise Teigpressen gefüllt und in die Öffnung eingebracht werden.

Falls das Pulver in einem geschlossenen Behältnis mit der Flüssigkeit gemischt werden soll, werden weitere Hilfsmittel wie beispielsweise Kugeln in einem zum Teil mit Luft gefüllten Raum benötigt. Zum Entleeren des Behälters ist eine im Wesentlichen flüssige Konsistenz der Mischung erforderlich.

Bekannt sind ferner flüssige Zweikomponenten-Vergussharze, die in einen Zweikammer-Folienbeutel mit Klemmverschluss eingebracht sind. Hier wird das Vergussharz nach dem Entfernen des Klemmverschlusses händisch vermischt und anschließend beispielsweise in Kabelschuhe gegossen.

Mehrkomponenten-Systeme zur Herstellung von Gipsschäumen und/oder Zement-Schäumen durch Mischen in offenen Gefäßen sind beispielsweise aus der EP 2 045 227 A bekannt. Diese Druckschrift beschreibt eine hydraulisch abbindende Zusammensetzung zur Herstellung von anorganischen Brandschutz- oder Isolier-Ortsschäumen mit einem pHneutralen oder alkalischen hydraulischen Bindemittel und einer Schäumungskomponente sowie einem Schaumstabilisator, wobei die Schäumungskomponente Sauerstoff oder Kohlendioxid freisetzt. Die bekannten anorganischen Brandschutzsysteme können jedoch nur schwer in Öffnungen eingebracht werden und sind häufig nur als Vergussmasse mit aufwendigen Schalungsvorrichtungen anwendbar.

Das Dokument DE 195 45 120 A1 offenbart einen Mischpackbeutel zum Ausschäumen von Kraftfahrzeughohlräumen. Der Mischpackbeutel umfasst zwei geschlossene Kammern, die miteinander verbindbar sind, die zwei Komponenten vorverpackt enthält.

Eine einfache und kostengünstige Verpackung zum schnellen Vermischen der pulverförmigen und flüssigen Komponenten für einen anorganischen Schaum auf Basis von Gips oder Mörtel in einem geschlossenen Behälter ist nicht bekannt. Daher sind derartige anorganische Schaumsysteme trotz eines relativ geringen Materialpreises bisher nicht marktüblich.

Der Erfindung liegt die Aufgabe zugrunde, eine einfache, anwenderfreundliche und kostengünstige Anwendungsform und Verpackung zum schnellen Mischen von Pulver und Flüssigkeiten in einem geschlossenen Behälter bereitzustellen, insbesondere für einen anorganischen Schaum auf Basis von Gips und/oder Mörteln für Brandschutzanwendungen. Die Anwendungsform soll das Mischen der Komponenten ohne aufwendige Werkzeuge gestatten und das Einbringen des Schaumsystems auch in enge und/oder schwer zugängliche Öffnungen ermöglichen.

Gelöst wird diese Aufgabe durch ein anorganisches Mehrkomponenten-Schaumsystem mit einem Mehrkammer-Folienbeutel gemäß Anspruch 1. Gegenstand der Erfindung ist ferner ein Verfahren zur Herstellung eines Ortsschaums aus einem anorganischen Mehrkomponenten-Schaumsystem unter Verwendung des erfindungsgemäßen Mehrkammer-Folienbeutels mit den Merkmalen des Anspruchs 10.

Vorteilhafte und zweckmäßige Ausgestaltungen des erfindungsgemäßen Verfahrens und des erfindungsgemäßen Folienbeutels sind in den zugehörigen Unteransprüchen angegeben.

Die Erfindung stellt einen Mehrkammer-Folienbeutel für ein anorganisches Mehrkomponenten-Schaumsystem bereit, mit wenigstens zwei flüssigkeitsdicht voneinander getrennten Kammern, wobei wenigstens eine der Kammern mit einer pulverförmigen anorganischen Komponente, bevorzugt auf Basis von Gips und/oder Zementmörtel, und wenigstens eine andere Kammer mit einer flüssigen Schäumungskomponente für die pulverförmige anorganische Komponente gefüllt ist. Ferner umfasst der Mehrkammer-Folienbeutel ein Trennelement, das die Kammern in einem ersten Zustand flüssigkeitsdicht voneinander trennt und in einem zweiten Zustand eine Strömungsverbindung zwischen den Kammern bereitstellt. Wenigstens eine der Kammern weist einen Öffnungsabschnitt auf, der zum Austragen des Schaumsystems geöffnet werden kann.

Das erfindungsgemäße anorganische Mehrkomponenten-Schaumsystem mit einem Mehrkammer-Folienbeutel ermöglicht es, ein Foliengebinde mit festen, durch die Verpackung vorgegebene Mengen der reaktiven Komponenten für das anorganische Schaumsystem bereitzustellen. Damit kann eine Fehldosierung durch den Anwender sicher vermieden werden und die Mischung steht zur sofortigen Anwendung bereit. Das Trennelement des Mehrkammer-Folienbeutels kann ohne Werkzeug einfach geöffnet werden. Durch einfaches Kneten der Komponenten können gute Mischungsergebnisse erzielt werden. Zum Austragen des Schaumsystems werden keine Misch- und Auspresswerkzeuge benötigt. Es bleibt dennoch möglich, den erfindungsgemäßen Folienbeutel oder Folienschlauch zum Austragen von Restmengen mit einem bekannten Foliendispenser für Einkomponentenmassen zu verwenden.

Der in wenigstens einer der Kammern vorgesehene Öffnungsabschnitt für das Austragen des Schaumsystems kann als Düsenspitze ausgebildet sein und somit eine Dosierung des Schaumsystems in enge und schwer zugängliche Öffnungen ermöglichen. Weiterhin kann das Schaumsystem nach dem Vermischen der Komponenten im Folienbeutel bereits in standfester pastöser Konsistenz vorliegen, um das Herausfließen der Masse aus den zu verfüllenden Öffnungen zu verhindern.

Mit der Erfindung wird ferner eine kostengünstige und platzsparende Folienverpackung bereitgestellt. Während des Mischens der reaktiven Komponenten in dem Folienbeutel kann keine Staubentwicklung aus der pulverförmigen Komponente auftreten. Ein Kontakt des Anwenders mit den reaktiven Schaumkomponenten während des Mischens ist ausgeschlossen, so dass eine Gesundheitsgefährdung durch reaktive Komponenten vermieden wird. Schließlich ist auch keine Reinigung von Mischwerkzeugen und Behältern nötig, da das Vermischen der Komponenten innerhalb der Folienverpackung erfolgt.

Obwohl die Erfindung im Folgenden anhand eines Zweikomponenten-Schaumsystems beschrieben wird, sind auch Mehrkomponenten-Systeme von der Erfindung umfasst und mit geringem Aufwand zu verwirklichen, die mehr als zwei reaktive Komponenten aufweisen, welche in dem Folienbeutel in mehr als zwei durch Trennelemente voneinander getrennten Kammern eingebracht sind.

Gemäß einer bevorzugten Ausführungsform ist das Mehrkomponenten-Schaumsystem ein Zweikomponenten-Schaumsystem eines anorganischen Brandschutzschaums oder Isolierschaums mit wenigstens einem hydraulischen Bindemittel, wenigstens einem Schäumungssystem sowie wahlweise einem Schaumstabilisator. Als hydraulisches Bindemittel können Zement, insbesondere Portlandzement, Trass, Puzzolane, hydraulische Kalke und Gips oder deren Mischungen verwendet werden. Das Schäumungssystem kann beispielsweise aus einem Alkali- oder Erdalkalicarbonat oder -hydrogencarbonat als Pulverkomponente und einer Säure als flüssige Schäumungskomponente oder alternativ gelöstem Carbonat (z.B. Natriumbicarbonat) in Wasser als flüssige Schäumungskomponente und einer festen Säure (z.B Zitronensäure) als Pulverkomponente gebildet sein. Das Schäumungssystem kann alternativ oder zusätzlich einen Sauerstoffträger und einen Katalysator umfassen. Als Sauerstoffträger und flüssige Schäumungskomponente kann insbesondere Wasserstoffperoxid in wässriger Lösung dienen. Der Katalysator kann Braunstein MnO₂ in Pulverform umfassen. Derartige Mehrkomponenten-Schaumsysteme sind aus der EP 2 045 227 A1 bekannt, die hiermit in Bezug genommen wird.

Das Trennelement kann als Peelnaht oder als Klemmelement ausgebildet sein. Die Peelnaht kann durch Heißsiegeln oder Verschweißen der einander gegenüberliegenden Folienwände des Folienbeutels in einem Randbereich einer Kammer erfolgen, so dass diese Kammer von der angrenzenden Kammer des Folienbeutels flüssigkeitsdicht abgetrennt wird. Durch Auswahl des Folienmaterials und/oder von geeigneten Folienbeschichtungen lässt sich die Reißfestigkeit der Peelnaht so einstellen, dass durch Druck auf eine der Kammern ein Aufreißen der Peelnaht erfolgt und eine Strömungsverbindung zwischen den Kammern bereitgestellt wird.

Gemäß einer weiteren Ausführungsform kann das Trennelement als Klemmnaht ausgebildet sein. Die Klemmnaht kann nach Art einer Lippenverschlusstasche oder Zipperverbindung mit zwei ineinander eingreifenden Klemmleisten gebildet sein. Möglich ist auch das Anbringen einer Klemmschiene an dem Folienbeutel von außen, wobei der Folienbeutel mit einer Flachseite auf die mit einem Längsschlitz versehene Klemmschiene aufgelegt und dann mit einem flexiblen oder stabförmigen Klemmstreifen von der anderen Flachseite des Folienbeutels aus in den Längsschlitz eingedrückt wird. Dadurch werden die einander gegenüberliegenden Folienwände des Folienbeutels zusammengepresst und es entsteht eine flüssigkeitsdichte Trennung der an den Klemmverschluss angrenzenden Kammern im Folienbeutel.

Die Klemmschiene und/oder der Klemmstreifen können als lose Teile bereitgestellt werden. Dadurch ist eine flexible Einteilung der Kammern im Folienbeutel möglich. Gemäß einer weiteren Ausführungsform ist die Klemmschiene und/oder der Klemmstreifen bereits an der Außenwand des Folienbeutels befestigt, beispielsweise durch Verkleben oder Verschweißen.

In einer alternativen Ausführungsform kann das Trennelement mit Zwangsmischverbindungen versehen sein, die eine schnellere und homogenere Vermischung der Pulverkomponente mit der Flüssigkeit ermöglichen. Insbesondere können im Bereich des Trennelements feste Stege zwischen den einander gegenüberliegenden Folien des Folienbeutels vorgesehen sein, oder es können Schweißnähte vorgesehen sein, die beim Druck auf eine der Kammern bestehen bleiben und nicht aufreißen.

Der Mehrkammerfolienbeutel kann als Standbodenbeutel, als Flachbeutel oder auch als Schlauchbeutel gebildet sein. Die Herstellung dieser Systeme ist dem Fachmann grundsätzlich bekannt. Standbodenbeutel werden üblicherweise mit einer W-Falte im Bodenbereich ausgestattet, die sich beim Füllen der Kammer im Bodenbereich ausdehnt und einen festen Stand des Folienbeutels gewährleistet. Flachbeutel werden üblicherweise durch Aufeinanderlegen zweier Kunststofffolien und randumlaufendes Verschweißen der Folien gebildet. Schlauchbeutel entstehen durch Spritzen der Kunststofffolien aus Runddüsen unter Bildung eines Folienschlauchs und bodenseitiges Verschweißen der Schlauchenden oder Verklemmen der Schlauchenden mit einem Metall- oder Kunststoffbügel. Vorzugsweise ist der Mehrkammerfolienbeutel als Flachbeutel mit randumlaufender Schweißnaht ausgebildet.

Gemäß einer weiteren Ausführungsform des Mehrkammer-Folienbeutels ist der Öffnungsabschnitt zum Austragen des Schaumsystems mit einem in den Folienbeutel eingeschweißten Schraubverschluss versehen. Ein Schraubverschluss erlaubt das Anbringen handelsüblicher Kartuschendüsen oder Düsenspitzen, mit denen das Schaumsystem je nach dem gewünschten Anwendungszweck am Applikationsort aus dem Folienbeutel ausgetragen werden kann.

Gemäß einer weiteren Ausführungsform kann der Öffnungsabschnitt zum Austragen des Schaumsystems durch eine in den Folienbeutel eingeschweißte, bevorzugt konisch oder spitz zulaufenden Düsenspitze oder Kunststofftülle gebildet sein. Bei Bedarf kann die Düsenspitze oder Tülle auch durch Aufstecken einer weiteren Kunststoffspitze verlängert werden. Vorzugsweise ist die Düsenspitze oder Kunststofftülle an ihrem freien Ende verschlossen und wird am Applikationsort je nach der gewünschten Größe der Düsenöffnung aufgeschnitten oder kann an einer vorgesehenen Schwächungszone, wie einer Einreißkerbe oder einer ringförmigen Sollbruchstelle, abgebrochen werden. Hierdurch wird keine Schere oder Messer benötigt. Die Verfüllung von bauseitigen Öffnungen ist so schnell, einfach und kostengünstig möglich.

Besonders bevorzugt ist der Öffnungsabschnitt zum Austragen des Schaumsystems durch eine an den Folienbeutel einstückig angeformte Tülle gebildet. Die Tülle kann rohrförmig sein oder zu ihrem der Kammer entgegengesetzten freien Ende hin konisch oder spitz zulaufen. Besonders bevorzugt ist die Tülle an ihrem freien Ende mit einer Schwächungszone wie beispielsweise einer Reißnaht versehen, die ein Aufreißen der Tülle ohne Werkzeug ermöglicht. Auf diese Weise können auch schwer zugängliche Öffnungen schnell, einfach und kostengünstig mit dem Schaumsystem verfüllt werden.

Gegenstand der Erfindung ist somit auch eine Verwendung des Mehrkammer-Folienbeutels zur Verpackung und/oder Verarbeitung eines anorganischen Mehrkomponenten-Schaumsystems.

Unter Verwendung des erfindungsgemäßen Mehrkammer-Folienbeutels kann ein Ortsschaum aus einem anorganischen Mehrkomponenten-Schaumsystem hergestellt werden, wobei eine der Kammern des Mehrkammer-Folienbeutels mit einer festen anorganischen Pulverkomponente und eine andere Kammer mit einer flüssigen Schäumungskomponente für die feste anorganische Pulverkomponente gefüllt wird, wobei die Kammern in einem ersten Lagerzustand durch ein Trennelement flüssigkeitsdicht voneinander getrennt sind, und wobei in einem zweiten Gebrauchszustand durch Öffnen des Trennelements eine Strömungsverbindung zwischen den Kammern bereitgestellt und die Pulverkomponente mit der flüssigen Schäumungskomponente gemischt wird. Nach dem Vermischen der Pulverkomponente und der Schäumungskomponente wird der Öffnungsabschnitt geöffnet und der im Folienbeutel gebildete Schaum wird aus dem Öffnungsabschnitt ausgetragen und in eine zu füllende Öffnung eingebracht.

Das anorganische Mehrkomponenten-Schaumsystem ist vorzugsweise ein Zweikomponenten-Schaumsystem, und besonders bevorzugt ein Brandschutzschaum.

Bevorzugt erfolgt das Vermischen der anorganischen Pulverkomponente mit der Schäumungskomponente im Gebrauchszustand durch manuelles Kneten der Masse im verschlossenen Folienbeutel.

Die Ausdehnung des während des Vermischens aus dem Schaumsystem gebildeten Schaums kann dadurch berücksichtigt werden, dass nicht das gesamte Kammervolumen mit der Pulverkomponente und/oder der flüssigen Komponente gefüllt wird. Damit steht ein hinreichendes Ausgleichsvolumen im Folienbeutel zur Verfügung, bis die Mischung vollständig ist und der Öffnungsabschnitt geöffnet werden kann.

Der aus dem Schaumsystem gebildete Schaum kann anschließend durch Druck auf das dem Öffnungsabschnitt entgegengesetzte Ende des Folienbeutels aus dem Öffnungsabschnitt ausgetragen und in die zu verfüllende Öffnung eingebracht werden. Die Verwendung von Düsenspitzen mit einer spitz zulaufenden Auspressöffnung und einem vorgegebenen Öffnungsquerschnitt ermöglicht ein gezieltes Einbringen des Schaumsystems auch in enge Spalte mit schlechter Zugänglichkeit. Die Düsenspitzen können mit Schwächungszonen versehen sein, so dass zum Öffnen der Auspressspitzen keine Schere oder kein Messer benötigt wird. Die bauseitigen Öffnungen können somit schnell, einfach und kostengünstig mit dem Schaumsystem ausgefüllt werden.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine schematische Darstellung des erfindungsgemäßen Folienbeutels gemäß einer ersten Ausführungsform;
- Figur 2 eine schematische Darstellung des erfindungsgemäßen Folienbeutels gemäß einer weiteren Ausführungsform.

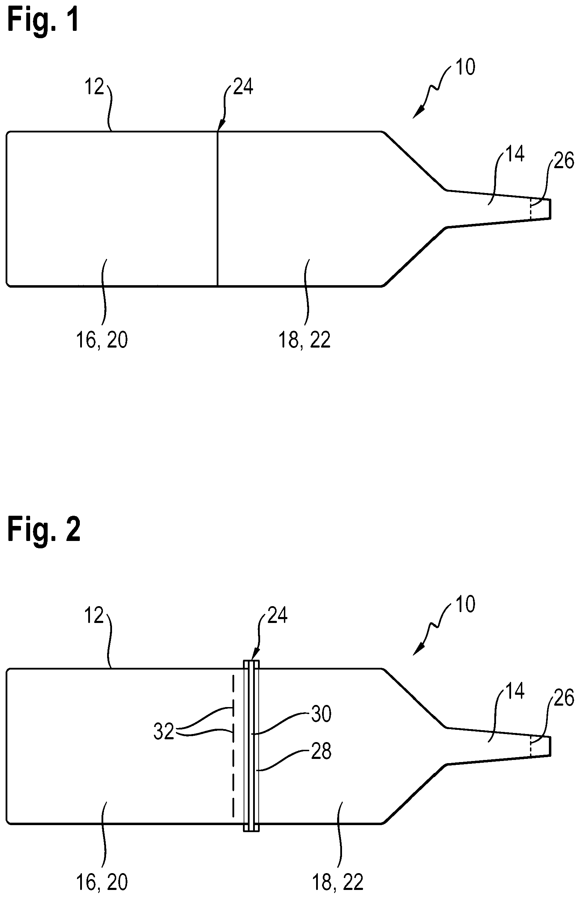

Der in Figur 1 dargestellte Mehrkammer-Folienbeutel 10 ist als Flachbeutel mit umlaufender Schweißnaht 12 und einem Öffnungsabschnitt 14 in Form einer einstückig an den Folienbeutel angeformten Tülle zum Austragen des Schaumsystems ausgebildet. Der Beutel 10 weist zwei Kammern 16, 18 auf, wobei die Kammer 16 eine feste anorganische Pulverkomponente 20 enthält und die andere Kammer 18 eine flüssige Schäumungskomponente 22 für die Pulverkomponente enthält. Die Kammern 16, 18 werden von der randumlaufenden Schweißnaht 12 und einem Trennelement 24, hier als heißgesiegelte Peelnaht dargestellt, begrenzt. Die Peelnaht stellt eine im Lagerzustand des Folienbeutels flüssigkeitsdichte Trennung der Kammern 16, 18 bereit. Ebenfalls gezeigt ist die zum vereinfachten Öffnen des Beutels ausgebildete Reißnaht 26 an der Tülle 14. Diese kann vorteilhafterweise durch eine Einkerbung ergänzt oder ersetzt werden.

Der in Figur 2 dargestellte Mehrkammer-Folienbeutel 10 ist ebenfalls als Flachbeutel mit umlaufender Schweißnaht 12 und einem Öffnungsabschnitt 14 in Form einer einstückig an den Folienbeutel angeformten Tülle zum Austragen des Schaumsystems ausgebildet. Der Beutel 10 weist zwei Kammern 16, 18 auf, wobei die eine Kammer 16 die feste anorganische Pulverkomponente 20 enthält und die andere Kammer 18 die flüssige Schäumungskomponente 22 enthält. Die Kammern 16, 18 werden von der randumlaufenden Schweißnaht 12 und einem Trennelement 24, hier als Klemmschiene 28 mit Klemmleiste 30 dargestellt, begrenzt. Zur flüssigkeitsdichten Trennung der Kammern 16, 18 wird die Klemmschiene 28 auf eine Flachseite des Folienbeutels 10 aufgelegt und dann der Klemmstreifen 30 von der anderen Flachseite des Folienbeutels 10 aus einen in der Klemmschiene gebildeten Längsschlitz eingedrückt. Dadurch werden die einander gegenüber liegenden Folienwände des Folienbeutels 10 im Lagerzustand zusammengepresst.

Im Bereich des Klemmelements 24 sind weiter Zwangsmischverbindungen 32 in Form von unterbrochenen Schweißnähten vorgesehen, die nach dem Öffnen des Klemmelements 24 im Gebrauchszustand des Folienbeutels 10 für eine Zwangsmischung der Komponenten in den Kammern 16, 18 sorgen. Ebenfalls gezeigt ist die zum vereinfachten Öffnen des Beutels an der Tülle 14 ausgebildete Reißnaht 26. Diese kann vorteilhafterweise durch eine Einkerbung ergänzt oder ersetzt werden.

Anstelle der Tülle 14 kann eine in den Folienbeutel eingeschweißte Düsenspitze oder ein Schraubverschluss vorgesehen sein, auf den eine Kartuschendüse aufgesetzt werden kann.

Die Pulverkomponente 20 umfasst in allen Ausführungsformen bevorzugt ein hydraulisch abbindendes Bindemittel auf Basis von Gips oder Zementmörtel, sowie die festen Bestandteile des Schäumungssystems wie ein Alkali- oder Erdalkalicarbonat und/oder einen Katalysator für das Freisetzen von Sauerstoff aus einem Sauerstoffträger. Die flüssige Schäumungskomponente umfasst vorzugsweise Wasser sowie die flüssigen bzw. gelösten Bestandteile des Schäumungssystems wie eine Säure und/oder Wasserstoffperoxid.

Zur Herstellung eines Ortsschaums aus dem anorganischen Mehrkomponenten-Schaumsystem 20, 22 wird das Trennelement 24 geöffnet und eine Strömungsverbindung zwischen den Kammern 16, 18 hergestellt. Der Folienbeutel 10 geht damit vom Lagerzustand, bei dem die Kammern 16, 18 flüssigkeitsdicht getrennt sind, in den Gebrauchszustand über. Durch manuelles Kneten wird die feste anorganische Pulverkomponente 20 mit der flüssigen Schäumungskomponente 22 unter Bildung eines Schaums bei geschlossenem Öffnungsabschnitt 14 vermischt. Nach dem Vermischen wird der Öffnungsabschnitt 14 geöffnet und die aufgeschäumte Masse durch Druck auf das dem Öffnungsabschnitt 14 entgegengesetzte Ende des Folienbeutels aus dem Folienbeutel ausgetragen und mithilfe der Tülle am Öffnungsabschnitt 14 direkt in die zu füllende bauseitige Öffnung eingebracht. Dort kann die Masse nachträglich in Form gebracht werden und aushärten.

### BEZUGSZEICHENLISTE

- 10: Mehrkammer-Folienbeutel
- 12: Schweißnaht
- 14: Tülle
- 16: Kammer
- 18: Kammer
- 20: feste anorganische Pulverkomponente
- 22: flüssige Schäumungskomponente
- 24: Trennelement
- 26: Reißnaht
- 28: Klemmschiene
- 30: Klemmleiste
- 32: Zwangsmischverbindungen

## Patentansprüche

1. Anorganisches Mehrkomponenten-Schaumsystem mit einem Mehrkammer-Folienbeutel (10), wobei der Mehrkammerfolienbeutel (10) wenigstens zwei flüssigkeitsdicht voneinander getrennten Kammern (16, 18) aufweist, wobei eine der Kammern (16, 18) mit einer pulverförmigen anorganischen Komponente (20), wahlweise auf Basis von Gips und/oder Zementmörtel, gefüllt ist, und eine andere Kammer mit einer flüssigen Schäumungskomponente (22) für die pulverförmige anorganische Komponente gefüllt ist, und mit ein Trennelement (24), das die Kammern (16, 18) in einem ersten Zustand flüssigkeitsdicht voneinander trennt und in einem zweiten Zustand eine Strömungsverbindung zwischen den Kammern (16, 18) bereitstellt, wobei wenigstens eine der Kammern (16, 18) einen Öffnungsabschnitt (14) aufweist, der zum Austragen des Schaumsystems geöffnet werden kann.

2. Anorganisches Mehrkomponenten-Schaumsystem gemäß Anspruch 1, wobei das Mehrkomponenten-Schaumsystem ein Brandschutzschaum ist.

3. Anorganisches Mehrkomponenten-Schaumsystem gemäß Anspruch 1 oder 2, wobei das Trennelement (24) eine Peelnaht oder ein Klemmelement umfasst.

4. Anorganisches Mehrkomponenten-Schaumsystem gemäß einem der vorangehenden Ansprüche, wobei das Trennelement (24) eine Klemmnaht oder Klemmschiene (28) mit Klemmstreifen (30) aufweist.

5. Anorganisches Mehrkomponenten-Schaumsystem gemäß einem der vorangehenden Ansprüche, wobei Zwangsmischverbindungen (32) im Bereich des Trennelements (24) vorgesehen sind.

6. Anorganisches Mehrkomponenten-Schaumsystem gemäß einem der vorangehenden Ansprüche, wobei der Folienbeutel (10) ein Standbeutel, ein Flachbeutel mit randumlaufend verschweißten Kanten, oder ein Schlauchbeutel ist.

7. Anorganisches Mehrkomponenten-Schaumsystem gemäß einem der vorangehenden Ansprüche, wobei der Öffnungsabschnitt (14) einen Schraubverschluss aufweist.

8. Anorganisches Mehrkomponenten-Schaumsystem gemäß einem der vorangehenden Ansprüche, wobei der Öffnungsabschnitt (14) eine in den Beutel eingeschweißte Düsenspitze aus Kunststoff umfasst.

9. Anorganisches Mehrkomponenten-Schaumsystem gemäß einem der vorangehenden Ansprüche, wobei der Öffnungsabschnitt (14) eine einstückig an den Folienbeutel angeformte Tülle mit Reißnaht aufweist.

10. Verfahren zur Herstellung eines Ortsschaums aus einem anorganischen Mehrkomponenten-Schaumsystem gemäß einem der vorhergehenden Ansprüche 1 bis 9, wobei eine der Kammern (16, 18) des Mehrkammer-Folienbeutels (10) mit einer pulverförmigen anorganischen Komponente (20), wahlweise auf Basis von Gips oder Zementmörtel, gefüllt wird, und eine andere Kammer (16, 18) mit einer flüssigen Schäumungskomponente (22) für die pulverförmige anorganische Komponente (20) gefüllt wird, wobei die Kammern (16, 18) in einem ersten Lagerzustand durch ein Trennelement (24) flüssigkeitsdicht voneinander getrennt sind, und wobei in einem zweiten Gebrauchszustand durch Öffnen des Trennelements (24) eine Strömungsverbindung zwischen den Kammern (16, 18) bereitgestellt und die pulverförmige anorganische Komponente (20) mit der Schäumungskomponente (22) gemischt wird, und wobei anschließend der Öffnungsabschnitt (14) geöffnet und der gebildete Schaum aus dem Öffnungsabschnitt (14) ausgetragen und in eine zu füllende Öffnung eingebracht wird.

11. Verfahren gemäß Anspruch 10, wobei das Mischen der pulverförmigen anorganischen Komponente (20) mit der flüssigen Schäumungskomponente (22) durch manuelles Kneten erfolgt.

## Claims

1. Inorganic multi-component foam system having a multi-chamber film pouch (10), wherein the multi-chamber film pouch (10) comprises at least two liquid-tight, separate chambers (16, 18), wherein one of the chambers (16, 18) is filled with a powdered inorganic component (20), optionally based on gypsum and/or cement mortar, and another chamber is filled with a liquid foaming component (22) for the powdered inorganic component, and having a separating element (24) which separates the chambers (16, 18) from one another in a liquid-tight manner in a first state and provides a flow connection between the chambers (16, 18) in a second state, wherein at least one of the chambers (16, 18) has an opening portion (14) which can be opened to discharge the foam system.

2. Inorganic multi-component foam system according to claim 1, wherein the multi-component foam system is a fire-protection foam.

3. Inorganic multi-component foam system according to either claim 1 or claim 2, wherein the separating element (24) comprises a peel seam or a clamping element.

4. Inorganic multi-component foam system according to any of the preceding claims, wherein the separating element (24) has a clamping seam or clamping rail (28) comprising clamping strips (30).

5. Inorganic multi-component foam system according to any of the preceding claims, wherein compulsory mixing compounds (32) are provided in the region of the separating element (24).

6. Inorganic multi-component foam system according to any of the preceding claims, wherein the film pouch (10) is a standing pouch, a flat pouch having edges which are welded around the periphery thereof, or a tubular pouch.

7. Inorganic multi-component foam system according to any of the preceding claims, wherein the opening portion (14) has a screw closure.

8. Inorganic multi-component foam system according to any of the preceding claims, wherein the opening portion (14) comprises a plastics nozzle tip welded into the pouch.

9. Inorganic multi-component foam system according to any of the preceding claims, wherein the opening portion (14) has a spout integrally formed on the film pouch and having a tear seam.

10. Method for producing a foam-in-place foam from an inorganic multi-component foam system according to any of the preceding claims 1 to 9, wherein one of the chambers (16, 18) of the multi-chamber film pouch (10) is filled with a powdered inorganic component (20), optionally based on gypsum or cement mortar, and another chamber (16, 18) is filled with a liquid foaming component (22) for the powdered inorganic component (20), wherein the chambers (16, 18) are separated from each other in a liquid-tight manner by a separating element (24) in a first storage state, and wherein, in a second state of use, a flow connection between the chambers (16, 18) is provided by opening the separating element (24) and the powdered inorganic component (20) is mixed with the foaming component (22), and wherein the opening portion (14) is then opened and the formed foam is discharged out of the opening portion (14) and is introduced into an opening to be filled.

11. Method according to claim 10, wherein the powdered inorganic component (20) is mixed with the liquid foaming component (22) by manual kneading.

## Revendications

1. Système de mousse inorganique à plusieurs composants, comportant un sachet en film à plusieurs compartiments (10), le sachet en film à plusieurs compartiments (10) comprenant au moins deux compartiments séparés de manière étanche aux liquides (16, 18), l'un des compartiments (16, 18) étant rempli d'un composant inorganique en poudre (20), éventuellement à base de gypse et/ou de mortier de ciment, et un autre compartiment étant rempli d'un composant moussant liquide (22) pour le composant inorganique en poudre, et comportant un élément de séparation (24) qui, dans un premier état, sépare les compartiments (16, 18) les unes des autres de manière étanche aux liquides, et dans un second état, crée une liaison d'écoulement entre les compartiments (16, 18), au moins l'un des compartiments (16, 18) présentant une partie d'ouverture (14) qui peut s'ouvrir pour décharger le système de mousse.

2. Système de mousse inorganique à plusieurs composants selon la revendication 1, le système de mousse à plusieurs composants étant une mousse d'ignifugation.

3. Système de mousse inorganique à plusieurs composants selon la revendication 1 ou 2, dans lequel l'élément de séparation (24) comprend un joint pelable ou un élément de serrage.

4. Système de mousse inorganique à plusieurs composants selon l'une quelconque des revendications précédentes, dans lequel l'élément de séparation (24) présente un joint de serrage ou un rail de serrage (28) comportant des bandes de serrage (30).

5. Système de mousse inorganique à plusieurs composants selon l'une quelconque des revendications précédentes, dans lequel des composés de mélange forcé (32) sont prévus dans la région de l'élément de séparation (24).

6. Système de mousse inorganique à plusieurs composants selon l'une quelconque des revendications précédentes, dans lequel le sachet en film (10) est un sachet à assise verticale, un sachet plat ayant des bords périphériques soudés, ou un sachet tubulaire.

7. Système de mousse inorganique à plusieurs composants selon l'une quelconque des revendications précédentes, dans lequel la partie d'ouverture (14) présente un bouchon à vis.

8. Système de mousse inorganique à plusieurs composants selon l'une quelconque des revendications précédentes, dans lequel la partie d'ouverture (14) comprend une pointe de buse en matière plastique soudée dans le sachet.

9. Système de mousse inorganique à plusieurs composants selon l'une quelconque des revendications précédentes, dans lequel la partie d'ouverture (14) présente un bec verseur avec joint de rupture, formé d'un seul tenant sur le sachet en film.

10. Procédé de production d'une mousse in situ à partir d'un système de mousse inorganique à plusieurs composants selon l'une quelconque des revendications précédentes 1 à 9, dans lequel l'un des compartiments (16, 18) du sachet en film à plusieurs compartiments (10) est rempli d'un composant inorganique en poudre (20), éventuellement à base de gypse ou de mortier de ciment, et un autre compartiment (16, 18) étant rempli d'un composant moussant liquide (22) pour le composant inorganique en poudre (20), les compartiments (16, 18) étant séparés l'un de l'autre, par un élément de séparation (24), de manière étanche aux liquides dans un premier état de stockage, et, dans un second état d'utilisation, une connexion d'écoulement étant créée entre les compartiments (16, 18) par l'ouverture de l'élément de séparation (24), et le composant inorganique en poudre (20) étant mélangé avec le composant moussant (22), et la partie d'ouverture (14) s'ouvrant ensuite et la mousse formée étant déchargée de la partie d'ouverture (14) et introduite dans une ouverture devant être remplie.

11. Procédé selon la revendication 10, dans lequel le mélange du composant inorganique en poudre (20) avec le composant moussant liquide (22) s'effectue par malaxage manuel.
